# FASCICULE DE BREVET EUROPEEN

(11) **EP 3 178 576 B1**
(45) Date de publication et mention de la délivrance du brevet: **30.09.2020**
(21) Numéro de dépôt: 16202859.1
(22) Date de dépôt: 08.12.2016
(51) Int. Cl.: C22B 3/44, B09B 3/00, C22B 7/00, C22B 3/00, H01L 31/18

(54) **PROCÉDÉ DE RECYCLAGE DE L' ARGENT PRÉSENT DANS UNE CELLULE PHOTOVOLTAÏQUE**
VERFAHREN ZUM RECYCLING VON IN EINER PHOTOVOLTAIKZELLE ENTHALTENEM SILBER
METHOD FOR RECYCLING THE SILVER CONTAINED IN A PHOTOVOLTAIC CELL

(30) Priorité: 11.12.2015 FR 1562252
(43) Date de publication de la demande: 14.06.2017
(73) Titulaire: Commissariat à l'Energie Atomique et aux Energies Alternatives, 75015 Paris (FR)
(72) Inventeur: Billy, Emmanuel, 38100 Grenoble (FR)
(74) Mandataire: Talbot, Alexandre

(56) Documents cités:
- CA-A1- 2 908 046
- DE-A1- 2 025 211
- US-A- 4 288 304
- ROAR R. SØNDERGAARD ET AL: "Efficient decommissioning and recycling of polymer solar cells: justification for use of silver", ENERGY & ENVIRONMENTAL SCIENCE, vol. 7, no. 3, 1 janvier 2014 (2014-01-01) , page 1006, XP055292314, UK ISSN: 1754-5692, DOI: 10.1039/c3ee43746a
- Lee Ch ET AL: "Resource recovery of scrap silicon solar battery cell. - PubMed - NCBI", , 4 mai 2013 (2013-05-04), XP055292347, Extrait de l'Internet: URL:http://www.ncbi.nlm.nih.gov/pubmed/234 60539 [extrait le 2016-07-29]
- ROAR R. SØNDERGAARD ET AL: "Efficient decommissioning and recycling of polymer solar cells: justification for use of silver", ENERGY & ENVIRONMENTAL SCIENCE, vol. 7, no. 3, 1 janvier 2014 (2014-01-01) , page 1006, XP055292052, UK ISSN: 1754-5692, DOI: 10.1039/c3ee43746a

## Description

### Domaine technique de l'invention

L'invention est relative à un procédé de recyclage de l'argent présent dans une cellule photovoltaïque, et, plus particulièrement, à un procédé de recyclage par voie de chimie verte.

### État de la technique

Les panneaux photovoltaïques présentent une ou deux faces recevant le rayonnement solaire, et comprennent classiquement :
- des cellules photovoltaïques, généralement en silicium,
- des électrodes, par exemple en cuivre, permettant de collecter le courant électrique généré par les cellules photovoltaïques,
- des connecteurs électriques reliant les électrodes à l'extérieur du panneau photovoltaïque,
- un polymère, de type EVA (éthylène vinyle acétate), utilisé pour encapsuler les cellules photovoltaïques,
- un cadre ainsi qu'un matériau de protection transparent, généralement en verre, recouvrant les cellules, les électrodes, et les connecteurs électriques.

Les panneaux photovoltaïques sont majoritairement composé de verre (74% du poids total), d'aluminium servant à la réalisation du cadre et souvent de connecteurs électriques (10%), de polymère (environ 6,5%), de silicium (environ 3%), d'autres métaux tels que le zinc, le plomb, le cuivre et l'argent représentent une faible part de la masse.

En raison du développement des panneaux photovoltaïques et de l'augmentation du coût des matières premières, la question de leur recyclage est devenue fondamentale, en particulier depuis que la Directive du 13 août 2012 relative aux Déchets d'Equipements Electriques et Electroniques (DEEE) a été étendue aux panneaux photovoltaïques.

Il est nécessaire de garantir un procédé de recyclage industriel et fiable qui répond aux enjeux économiques et environnementaux.

Les objectifs minimaux de valorisation et de recyclage sont aisément atteints par la seule récupération du verre et du cadre en aluminium du panneau photovoltaïque.

Pour améliorer la quantité de composants recyclés, les procédés actuels se concentrent sur le démantèlement des modules par voie chimique ou thermique puis sur la valorisation d'un ou de plusieurs éléments du module par des voies de traitement des déchets spécialisées.

La première voie de recyclage consiste à dissoudre non sélectivement les différents constituants des cellules photovoltaïques. La dissolution totale des couches d'oxyde, de silicium, et des éléments métalliques (comme Cu, Ag, Sn, Pb, Al, ...) nécessite l'utilisation de solutions nocives et dangereuses. Les bains de traitement sont, classiquement, composés de mélanges d'acides concentrés, généralement portés à ébullition : mélange d'acide nitrique et d'acide fluorhydrique (JP2005311178), mélange de HF, HNO₃, H₂SO₄ et CH₃COOH (KR101092259 et KR101256574).

Une succession de différents bains de solvant organique, d'acide oxydant, d'acide chlorhydrique permet, respectivement, de retirer la grille de conduction, les résidus métalliques, et de complexer les ions métalliques (CN102343352).

Ces différents procédés nécessitent une dissolution totale du module photovoltaïque, à travers des procédés complexes et onéreux. Les déchets (solvant organique, acide fort) résultants du procédé doivent, de plus, être traités.

Il est, de plus, particulièrement important de pouvoir recycler l'argent présent dans les modules photovoltaïques. En effet, l'argent représente le métal constituant la plus forte valeur ajoutée, près de 90% de la valeur du module. Des procédés en plusieurs étapes sont nécessaires pour valoriser cet élément. Par exemple, le document CN102851506 décrit un procédé multi-étapes comprenant les étapes suivantes :
- l'aluminium est retiré avec de l'acide chlorhydrique,
- l'argent est mis en solution en présence d'eau,
- le nitrure de silicium est retiré par ajout d'acide fluorhydrique,
- l'argent est précipité en solution par ajout de poudre de fer.

Même si ce procédé permet de récupérer l'argent, le procédé nécessite l'utilisation de nombreuses étapes et donc de nombreux réactifs qui doivent ensuite être traités, afin de limiter l'impact environnemental.

Si une véritable voie de mise en solution et de valorisation de l'argent par voie de chimie verte ne semble pas avoir été considérée, elle semble judicieuse au vu des traitements actuels et des enjeux économiques et environnementaux concernant la valorisation de l'argent.

La publication Yi et al. (Recovering valuable metals from recycled photovoltaics modules; Journal of the Air & Waste Management Association) traite de la récupération des métaux de valeur à partir du recyclage des modules photovoltaïques. Le procédé prévoit une étape de broyage, une étape de lixiviation pouvant être réalisée soit avec des solutions acides, soit avec des solutions basiques. L'acide nitrique est présenté comme efficace pour retirer l'argent. L'acide nitrique seul permet de retirer l'argent et un deuxième bain d'hydroxyde de sodium est utilisé pour retirer l'aluminium.

Un autre procédé de recyclage de l'argent présent dans une cellule photovoltaïque est connu du document XP055292314.

Le document (CA 2 908 046) traite d'un procédé de récupération sélective de métaux à partir de substrats complexes qui comporte des métaux ou ces métaux sous une forme sulfidique. Le métal sulfidique ou l'oxyde métallique se trouvant dans le substrat complexe est transformé sous une forme soluble au moyen d'une solution aqueuse qui comporte un oxydant.

Un premier traitement est réalisé pour récupérer le plomb. Afin de récupérer l'argent présent dans le résidu de ce premier traitement, il est proposé de traiter ce résidu avec une solution d'ammoniaque. Ensuite, il est possible de déposer électrolytiquement l'argent. Le lixiviat oxydant peut être électrochimiquement régénéré.

La publication de Lee et al. (ressource recovery of scrap silicon solar battery cell ; Waste Management Ressource 2013 May 31(5)) propose de récupérer des éléments à partir d'une batterie solaire en silicium. Les batteries sont transformées en poudre et cette poudre est analysée afin de déterminer sa composition. Un procédé de lixiviation est réalisé avec de l'acide nitrique, de l'acide chlorhydrique et de l'acide sulfurique ou de l'hydroxyde de sodium afin de récupérer de l'argent et de l'aluminium. L'argent est récupéré par précipitation, électrolyse ou un procédé de remplacement.

### Objet de l'invention

L'invention a pour but de remédier aux inconvénients de l'art antérieur et, en particulier, de proposer un procédé de recyclage de l'argent présent dans une cellule photovoltaïque par voie de chimie verte, ne nécessitant pas l'utilisation d'acides fortement concentrés.

L'invention porte ainsi sur un procédé de recyclage tel que défini dans les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux figures annexées dans lesquelles :
- la figure 1, représente des graphiques donnant la densité de courant en fonction du potentiel vs Ag/AgCl, lors de l'électrodéposition de l'argent dans un liquide ionique pour différents anions : DCA, Cl, Br, I,
- la figure 2 représente une image, obtenue au microscope électronique à balayage, d'argent électrodéposé, selon le procédé de l'invention ; l'échelle représente 20*µ*m,
- la figure 3 représente un spectre, obtenu par analyse dispersive en énergie, du dépôt d'argent de la figure 2.

### Description d'un mode de réalisation préférentiel de l'invention

Le procédé de recyclage de l'argent présent dans une cellule photovoltaïque comme défini dans la revendication 1 comprend les étapes successives suivantes :
a) broyer la cellule photovoltaïque, de manière à former un broyat contenant des particules d'argent,
b) dissoudre l'argent contenu dans le broyat dans une solution contenant :
   ∘ au moins un liquide ionique,
   ∘ un médiateur redox,
   ∘ éventuellement de l'eau,
   la dissolution conduisant à la formation d'ions argent en solution,
c) séparer le broyat de la solution,
d) réaliser une électrolyse de la solution pour réduire les ions argent et pour régénérer le médiateur redox.

L'argent peut ainsi être recyclé, à travers une étape de dissolution chimique et une étape de dépôt électrochimique, sans utiliser d'acides ou de bases concentrés. Toutes ces étapes b) à d) ont lieu dans une même solution contenant au moins un liquide ionique. La solution à la fin du procédé est régénérée et peut servir pour valoriser l'argent d'une autre cellule photovoltaïque.

La dissolution de minerais contenant de l'or et de l'argent dans un liquide ionique de type bmim⁺(X⁻) (avec X⁻ = Cl⁻, HSO₄⁻, CH₃SO₃⁻, N(CN)₂⁻) en présence de thiourée, ou d'un autre composé soufré, et de sulfate de fer (III) a été étudiée précédemment (Whitehead et al., Green Chem., 2004, 6, 313-315 et Whitehead et al., Hydrometallurgy, 2007, 88, 109-120).

Quelques articles concernent la récupération de l'argent par électrodéposition dans des liquides ioniques de type chloroaluminate (Xu et al., J. Electrochem. Soc., 1992, 139, 5, 1295-1300), et dans des liquides ioniques à base de chlorure de choline (Abbott et al., Phys. Chem. Chem. Phys., 2007, 9, 3735-3743).

Ces articles concernent soit la dissolution de l'argent soit l'électrodéposition de l'argent mais aucun ne divulgue un procédé combinant ces deux étapes.

Le procédé de l'invention concerne le recyclage de cellules photovoltaïques et couple, avantageusement, à la fois la dissolution et la récupération électrolytique de l'argent dans un même liquide ionique, en présence d'un médiateur rédox. Ce procédé par voie de chimie verte n'utilise pas de composés soufrés.

Le procédé de recyclage est applicable aux cellules photovoltaïques de type cristallin, en silicium cristallin par exemple, ou de type polycristallin, en silicium polycristallin par exemple. Il peut, également, être utilisé pour tout type de substrat en silicium amorphe contenant de l'argent.

Les cellules photovoltaïques proviennent d'un panneau ou module photovoltaïque.

La cellule photovoltaïque est récupérée après séparation et désolidarisation des cellules photovoltaïques d'un panneau photovoltaïque et après élimination des boîtes de jonction, et du cadre métallique du panneau photovoltaïque. Une fois les cellules photovoltaïques désolidarisées, elles sont avantageusement déconnectées les unes des autres et, éventuellement, des connecteurs électriques ne contenant pas d'argent.

L'argent, présent dans les cellules photovoltaïques, provient particulièrement des électrodes, réalisées par exemple avec une pâte de métallisation en argent, ainsi que des connecteurs électriques. Les connecteurs sont par exemple formés d'un cœur en cuivre enrobé de Sn₆₂Pb₃₆Ag₂.

Avant l'étape a), un traitement thermique est, avantageusement, réalisé de manière à éliminer les éléments en polymère, par exemple en éthyle vinyle acétate (EVA) présents dans la cellule photovoltaïque. Le traitement thermique peut être réalisé dans un four.

Les éléments restants de la cellule photovoltaïque sont ensuite broyés lors de l'étape a), de manière à obtenir un broyat contenant les particules d'argent.

Par particules d'argent, on entend de l'argent sous forme solide. Les particules peuvent avoir différentes dimensions selon les conditions de broyage choisies. Elles seront néanmoins suffisamment petites pour avoir une grande surface spécifique et être dissoutes dans la solution de dissolution plus facilement. Elles auront, avantageusement, une taille inférieure à 1 centimètre. La taille correspond à la dimension la plus importante de la particule, généralement le diamètre ou la longueur.

Certaines cellules photovoltaïques comportent un cadre en aluminium et/ou des connecteurs en aluminium.

Dans ce mode de réalisation particulier, après l'étape a) et avant l'étape b), une étape de désaluminisation en milieu aqueux est, avantageusement, réalisée. Pour cela, le broyat est plongé dans une solution acide, ayant un pH allant de 0 à 4, pour dissoudre l'aluminium présent dans la cellule photovoltaïque et le séparer du broyat.

Le rapport solide/liquide est compris entre 1% et 45%, et de préférence, le rapport solide/liquide est compris entre 1% et 30%. Ce ratio est noté S/L. Préférentiellement, le ratio S/L est de l'ordre de 10%. Par 10%, on entend 10%±1%.

La phase solide correspond à l'aluminium à dissoudre. La phase liquide correspond à la solution acide.

Ce ratio correspond à la masse de solide, i.e. la masse d'oxyde métallique, en grammes, divisée par le volume de la solution, en millilitres.

Ainsi, un ratio S/L compris entre 1% et 30% correspond à une concentration massique de l'oxyde métallique dans la solution acide compris entre 0,01g/mL et 0,3g/mL.

Pour des valeurs S/L inférieures à 1%, le rendement de dissolution est également élevé. Cependant, la quantité d'acide utilisée est considérablement élevée par rapport à la quantité de métal à dissoudre, et la quantité de réactifs perdus est conséquente.

La température de la solution acide est, avantageusement, comprise entre 20°C et 80°C. Elle est, de préférence, de l'ordre de 25°C pour minimiser la toxicité et réduire la consommation énergétique du procédé.

L'argent n'est pas ou très peu dissous dans la solution acide. On considère que la dissolution de l'argent est négligeable lors de cette étape.

Lors de l'étape b), l'argent est dissous dans une solution contenant au moins un liquide ionique et un médiateur redox et, éventuellement, de l'eau.

On entend par liquide ionique un solvant comprenant au moins un cation et un anion dont l'association génère un liquide avec une température de fusion inférieure à 100°C. Un liquide ionique est un liquide non-volatile et ininflammable.

Le cation est, avantageusement, choisi parmi les familles suivantes : imidazolium, pyrrolidinium, ammonium, pipéridinium et phosphonium.

De préférence, le cation est un imidazolium. Ce cation est stable jusqu'à un potentiel cathodique suffisamment important pour pouvoir réaliser un dépôt électrochimique d'argent, lors de l'étape d).

Son association avec différents anions répond aux exigences de stabilité thermique (supérieure à 200°C) et chimique (pas d'hydrolyse). Il est liquide à température ambiante avec de nombreuses associations d'anions. Sa conductivité est satisfaisante pour un grand nombre d'anions.

Par température ambiante, on entend une température de l'ordre de 20-25°C.

L'anion peut être organique ou inorganique.

L'anion est, de préférence, un complexant du métal argent. Il n'y a pas besoin d'introduire en plus, en solution, un autre complexant.

La solution est, avantageusement, dépourvue de composés soufrés. Il a été découvert que l'anion du liquide ionique est suffisamment complexant pour ne pas utiliser de composés soufrés, comme dans l'art antérieur.

L'espèce complexante peut rester en solution tout au long du procédé et la solution, après électrodéposition et régénération, peut servir une nouvelle fois pour un procédé de recyclage.

L'anion est, avantageusement, choisi parmi les halogénures (Cl⁻, Br⁻, I⁻) le thiocyanate, le tricyanomethanide et le dicyanamide.

Ces complexants particuliers, présents intrinsèquement, dans le liquide ionique présentent, avantageusement, une solubilité et une stabilité chimique améliorée par rapport à des complexants soufrés comme la thiourée ou le thiosulfate. Préférentiellement, l'anion est un halogénure, et encore plus préférentiellement, il s'agit de l'anion chlorure.

Avantageusement, la stabilité anodique des chlorures est supérieure à celle de nombreux autres complexants. Des oxydants plus puissants peuvent donc être utilisés pour améliorer les cinétiques de lixiviation.

Un liquide ionique comportant des chlorures, des iodures ou des bromures sera soluble dans une solution contenant de l'eau, car cet anion de petite taille peut former plus facilement des liaisons hydrogène avec l'eau. L'anion chlorure sera préféré pour un procédé par voie de chimie verte.

De l'argent métallique de haute pureté (99.99%) a été chimiquement dissous dans les liquides ioniques BMIM[X] ([X]=[DCA], [Cl], [Br] et [I]). BMIM représente le cation 1-butyl-3-méthylimidazolium et DCA représente l'anion dicyanamide.

Les vitesses de dissolution de l'argent ont été établies à température ambiante pour une agitation de 400 rpm et sous atmosphère inerte.

La connaissance de la surface des fils d'argent immergés a permis de définir une vitesse de dissolution moyenne de l'argent sur une période de 5h (en mg_{Ag}.h⁻¹.cm⁻²) en supposant que la variation de surface est négligeable. Les résultats de dissolution indiquent que la vitesse décroît suivant l'anion du liquide ionique tel que :
I⁻ (8,15 mg_{Ag}.cm⁻²_{Ag}.h⁻¹) > Cl⁻ (5,45) ≈ Br⁻ (5,40) > DCA⁻ (1,55)

A titre comparatif, des essais en milieu HNO₃ ont été réalisés à 1 mol.L⁻¹ et 4 mol.L⁻¹ dans les mêmes conditions opératoires. Les résultats montrent qu'à température ambiante la dissolution de l'argent est nulle dans ces milieux.

Le liquide ionique a une concentration comprise entre 0,1 mol/L et 10mol/L, de préférence entre 1mol/L et 10mol/L, et encore plus préférentiellement entre 1mol/L et 5mol/L.

De telles concentrations représentent un bon compromis entre la quantité de réactifs nécessaire pour favoriser la complexation de l'argent en solution, et l'obtention d'une solution présentant de bonnes propriétés de transport. De telles concentrations favorisent la cinétique de dissolution de l'argent.

Selon un mode de réalisation particulier, la solution comporte deux liquides ioniques, le premier liquide ionique jouant le rôle de support neutre et le second liquide ionique jouant le rôle de complexant.

Le premier liquide ionique est, par exemple, le bis(trifluorométhane) sulfonide imide, aussi nommé NTf2.

Avantageusement, un tel liquide ionique ne présente pas de problème d'hydrolyse avec l'eau, comme c'est le cas par exemple pour les liquides ioniques comportant des anions de tétrafluoroborate, qui conduisent, lors de l'hydrolyse à la formation de HF.

En plus du liquide ionique, la solution comporte un médiateur redox.

Par médiateur redox, on entend un ion en solution capable d'être réduit lors de la lixiviation, ou dissolution, de l'argent et d'être oxydé lors de l'électrolyse.

Le médiateur redox est, avantageusement, un sel métallique dissous en solution, choisi parmi le fer, le cuivre, le ruthénium, l'argent, l'étain, le cobalt, le vanadium, le chrome, le cobalt, et le manganèse.

Le sel métallique est, de préférence, un sel de fer (III), par exemple du FeCl₃, ou un sel de cuivre (II), comme du sulfate de cuivre (II).

Ces sels sont solubles dans les liquides ioniques dans leurs deux états d'oxydation (Fe²⁺/Fe³⁺ ou Cu⁺/Cu²⁺). Ils ne dégradent pas les liquides ioniques et ne sont pas toxiques, à la différence des réducteurs conventionnels qui se dégradent durant la réaction de dissolution, comme c'est le cas, par exemple de HNO₃ qui entraîne la génération et la consommation irréversible des nitrates avec formation de NOₓ.

Ces médiateurs redox ont des potentiels redox adéquats. Par adéquat, on entend que les potentiels redox des couples sont suffisamment élevés sans pour autant atteindre la fenêtre anodique des liquides ioniques.

Ces médiateurs redox ne se déposent pas avec l'argent lors de l'électrodéposition. Ils restent en solution, ce qui autorise une récupération complète de l'argent sous forme pure.

Selon un mode de réalisation préférentiel, la solution comporte, en outre, de l'eau. La présence d'eau améliore les conditions de transport (viscosité, conductivité ionique) de la solution.

La solution peut comporter de 0% à 90% molaire d'eau.

Le pourcentage de l'eau par rapport au liquide ionique est, avantageusement, inférieur à 50% molaire, et de préférence de l'ordre de 10% molaire.

La quantité d'eau ajoutée dépend de la nature des liquides ioniques. L'eau sera ajoutée dans le liquide ionique, au maximum, jusqu'à saturation en eau du liquide ionique.

Pour une solution contenant de l'eau, le cation du liquide ionique est, avantageusement, un imidazolinium et l'anion est un halogénure, et encore plus préférentiellement, un anion chlorure.

Ces éléments sont, avantageusement, solubles dans l'eau. De plus, ce type de liquide ionique présente un pouvoir complexant suffisamment fort pour favoriser la lixiviation tout en ne nécessitant pas trop d'énergie pour pouvoir réaliser l'électrodéposition de l'argent.

L'introduction des particules d'argent dans la solution contenant au moins le liquide ionique et le médiateur redox entraîne la dissolution immédiate de l'argent par un mécanisme redox avec le médiateur - étape b). L'étape de dissolution est réalisée à une température entre 15°C et 80°C, et de préférence à température ambiante, c'est-à-dire de l'ordre de 25°C. Il n'y a, avantageusement, pas besoin d'apport d'énergie thermique pour réaliser la dissolution de l'argent. Toutefois, une augmentation de la température peut être, avantageusement, réalisée pour améliorer la vitesse de dissolution sans dégradation du milieu (pour des températures comprises entre 15 et 80°C).

Les étapes du procédé sont également réalisées à pression ambiante, c'est-à-dire à une pression de l'ordre de 1bar.

Le procédé est réalisé sous air.

Le rapport solide/liquide, lors de la dissolution de l'argent, est compris entre 1% et 45%, et de préférence, le rapport solide/liquide est compris entre 1% et 30%. Préférentiellement, ce rapport est de l'ordre de 10%. Par 10%, on entend 10%±1%.

La phase solide correspond à l'argent. La phase liquide correspond à la solution.

Après dissolution de l'argent, le broyat, dépourvu d'argent, est extrait du bain par séparation solide-liquide - étape c).

L'argent peut alors être récupéré et le médiateur redox peut être régénéré par électrolyse, lors de l'étape d). A l'électrode négative, l'argent est déposé sous forme métallique. Simultanément, l'électrode positive est le siège d'une oxydation du médiateur redox qui est régénéré.

L'électrode négative est, avantageusement, en acier inoxydable, en carbone, en titane, en argent ou en un métal noble.

L'électrode positive est, avantageusement, en acier, en carbone ou en un métal noble.

Avantageusement, lors de cette étape, le liquide ionique joue le rôle de conducteur ionique, évitant ainsi l'apport de sel conducteur.

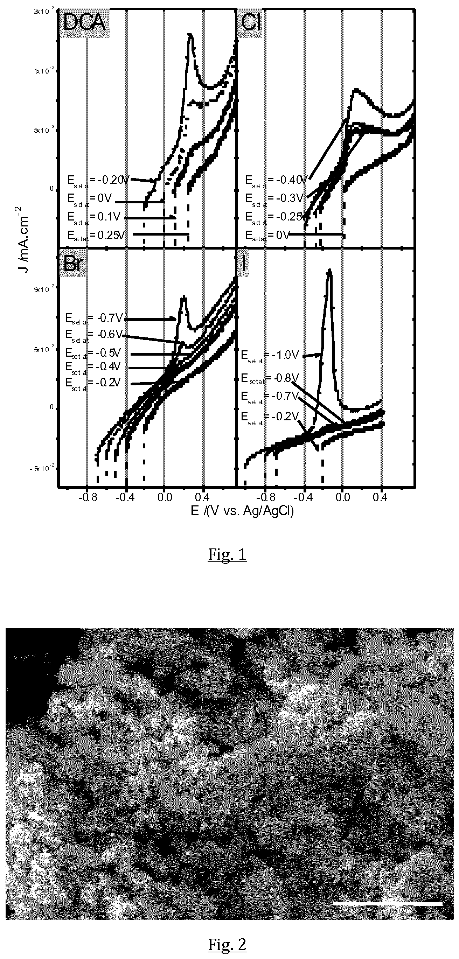

Comme représenté à la figure 1, de l'argent a été électrodéposé dans les liquides ioniques BMIM[X] ([X]=[DCA], [Cl], [Br] et [I]). Tous ces liquides ioniques sont adaptés au dépôt électrochimique d'argent. Les potentiels diffèrent suivant la nature de l'anion du liquide ionique :
E_{DCA} (0,1V vs. Ag/AgCl) > E_{Cl} (-0,25V) > E_{Br} (-0,60V) > E_{I} (-0,80V)

L'apport énergétique sera, avantageusement, limité pour électrodéposer de l'argent dans un liquide ionique dont l'anion est un ion chlorure.

Après l'étape d), la solution contenant le liquide ionique et le médiateur redox régénéré est alors utilisable pour un nouveau traitement.

Le procédé va maintenant être décrit à l'aide de l'exemple suivant donné à titre illustratif et non limitatif.

Les cellules photovoltaïques sont d'abord traitées thermiquement afin de brûler l'EVA et séparer les cellules des connecteurs. Cette étape a lieu dans un four sous air à 500°C pendant 1h.

Les cellules collectées sont ensuite broyées à l'aide d'un broyeur à boulet (étape a). Les cellules sont immergées dans une solution d'acide sulfurique à 1 mol.L⁻¹ avec un ratio solide/liquide de 10% (g/mL) et avec un asservissement constant du pH. La réaction a duré 24h, à 25°C avec une agitation à 400 tours/min.

Les phases solide et liquide sont ensuite séparées par centrifugation et filtration.

Le volume de la phase liquide a été ajusté dans une fiole jaugée puis la solution a été analysée par spectrométrie par torche à plasma couplée à la spectrométrie d'émission optique (ou ICP-OES pour « Inductively Coupled Plasma Optical-Emission Spectrometry » en anglais).

A l'issu du traitement, l'aluminium, le zinc et le bore ont été intégralement dissous.

La phase solide a été mise à l'étuve. Le solide est ensuite introduit dans un milieu liquide ionique de chlorure de butyl-methyl-imidazolium (BMIMCI) dans lequel est dissous du chlorure de fer (FeCl₃) à une concentration de 0,15mol.L⁻¹ avec 10% molaire d'eau (étape b). La solution est liquide à température ambiante. Le solide est immergé dans la solution liquide ionique avec un ratio solide/liquide de 10% (g/mL). La réaction a duré 24h, à 25°C avec une agitation à 400 tours/min. Les phases solide (enrichie en silicium) et liquide ont ensuite été séparées par filtration après dissolution complète de l'argent (étape c).

La phase liquide a ensuite été utilisée pour faire un dépôt d'argent sur carbone vitreux (étape d). Un montage à trois électrodes est utilisé. L'électrode de travail et la contre électrode sont en carbone vitreux. Le potentiel est maintenu à -1,2V pendant trois heures (mode potentiostatique) sous agitation à 100tours/min, ce qui permet de, préférentiellement, réduire l'argent sur l'électrode en carbone vitreux. Le dépôt est directement analysé par microscopie électronique à balayage (MEB) et par microanalyse par analyse dispersive en énergie (ou EDX pour « Energy-dispersive X-ray spectroscopy »). La figure 2 représente un cliché de la microstructure du dépôt. La structure du dépôt d'argent est de type « chou-fleur ».

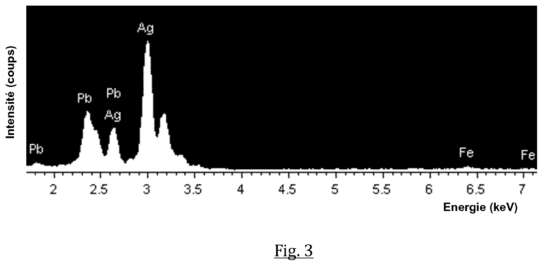

L'analyse EDX de la figure 3 permet de confirmer qu'il s'agit bien d'un dépôt d'argent. Ce dépôt d'argent contient quelques impuretés de plomb, de fer et de chlorures. Ces impuretés résiduelles seront majoritairement retirées après un lavage du dépôt d'argent dans de l'eau. Le dépôt d'argent est insoluble dans l'eau.

Avant lavage, l'analyse semi-quantitative par EDX indique que la teneur en argent est supérieure à 90% pour atteindre un grade supérieur, après lavage des éléments piégés dans le dépôt d'argent. On constate également l'absence de cuivre et d'aluminium dans le dépôt.

A la différence des procédés existants, ce procédé de valorisation de l'argent par voie de chimie verte n'utilise pas d'acide concentré ou de base concentrée et peut être réalisé à température ambiante, ce qui diminue l'apport énergétique nécessaire à la réalisation des différentes étapes. Il n'y a pas de dégagement de gaz nocifs.

## Revendications

1. Procédé de recyclage de l'argent présent dans une cellule photovoltaïque comprenant les étapes successives suivantes :
a) broyer la cellule photovoltaïque, de manière à former un broyat contenant des particules d'argent,
b) dissoudre l'argent contenu dans le broyat dans une solution contenant :
∘ au moins un liquide ionique sous la forme d'un solvant comprenant au moins un cation et un anion dont l'association génère un liquide avec une température de fusion inférieure à 100°C,
∘ un médiateur redox sous la forme d'un ion en solution capable d'être réduit lors d'une étape de lixiviation ou de dissolution de l'argent et d'être oxydé lors d'une étape d'électrolyse
∘ éventuellement de l'eau,
la dissolution conduisant à la formation d'ions argent en solution,
c) séparer le broyat de la solution,
d) réaliser une électrolyse de la solution pour réduire les ions argent et pour régénérer le médiateur redox.

2. Procédé selon la revendication précédente, **caractérisé en ce que** l'étape de dissolution est réalisée à une température entre 15°C et 80°C, et de préférence de l'ordre de 25°C.

3. Procédé selon l'une quelconque des revendications précédents, **caractérisé en ce que** le médiateur redox est un sel métallique, choisi parmi le fer, le cuivre, le ruthénium, l'argent, l'étain, le cobalt, le vanadium, le chrome, et le manganèse.

4. Procédé selon la revendication précédente, **caractérisé en ce que** le sel métallique est un sel de fer (III) ou un sel de cuivre (II).

5. Procédé selon l'une quelconque des revendications précédentes, **caractérisé en ce que** le liquide ionique est formé d'un cation et d'un anion,
le cation étant choisi parmi l'imidazolium, le pyrrolidinium, l'ammonium, le pipéridinium et le phosphonium,
l'anion étant choisi parmi les halogénures, le thiocyanate, le tricyanomethanide et le dicyanamide.

6. Procédé selon la revendication précédente, **caractérisé en ce que** le cation est un imidazolium et **en ce que** l'anion est un halogénure.

7. Procédé selon l'une quelconque des revendications précédentes, **caractérisé en ce que** la solution est dépourvue de composés soufrés.

8. Procédé selon l'une quelconque des revendications précédentes, **caractérisé en ce que** lors de l'étape d), l'électrode négative est en acier inoxydable, en carbone, en titane, en argent ou en un métal noble.

9. Procédé selon l'une quelconque des revendications précédentes, **caractérisé en ce que** lors de l'étape d), l'électrode positive est en acier, en carbone ou en un métal noble.

10. Procédé selon l'une quelconque des revendications précédentes, **caractérisée en ce que** la cellule photovoltaïque est une cellule en silicium cristallin ou en silicium polycristallin.

11. Procédé selon l'une quelconque des revendications précédentes, **caractérisée en ce que**, avant l'étape a), un traitement thermique est réalisé de manière à éliminer les éléments en polymère présents dans la cellule photovoltaïque.

12. Procédé selon l'une quelconque des revendications précédentes, **caractérisé en ce que**, après l'étape a), le broyat est plongé dans une solution acide, ayant un pH allant de 0 à 4, pour dissoudre de l'aluminium présent dans la cellule photovoltaïque et le séparer du broyât.

13. Procédé selon la revendication précédente, **caractérisé en ce que** la température de la solution acide est comprise entre 20°C et 80°C.

14. Procédé selon l'une des revendications 12 et 13, **caractérisé en ce que** le rapport solide/liquide est compris entre 1% et 30%, et de préférence, le rapport solide/liquide est de l'ordre de 10%.

15. Procédé selon l'une quelconque des revendications précédentes, **caractérisé en ce que** le pourcentage de l'eau, dans la solution, par rapport au liquide ionique est inférieur à 50% molaire, et de préférence de l'ordre de 10% molaire.

16. Procédé selon l'une quelconque des revendications précédentes, **caractérisé en ce que** le liquide ionique a une concentration comprise entre 0,1mol/L et 10mol/L, de préférence entre 1mol/L et 10mol/L, et encore plus préférentiellement entre 1mol/L et 5mol/L.

17. Procédé selon l'une quelconque des revendications précédentes, **caractérisé en ce que** la solution comporte deux liquides ioniques, le premier liquide ionique jouant le rôle de support neutre et le second liquide ionique jouant le rôle de complexant.

18. Procédé selon la revendication précédente, **caractérisé en ce que** le premier liquide ionique est du bis(trifluorométhane) sulfonide imide.

## Patentansprüche

1. Verfahren zum Recycling von Silber, das in einer Photovoltaikzelle enthalten ist, umfassend die folgenden aufeinander folgenden Schritte:
a) Zerkleinern der Photovoltaikzelle zu einem silberpartikelhaltigen Zerkleinerungsgut,
b) Lösen des in dem Zerkleinerungsgut enthaltenen Silbers in einer Lösung, enthaltend:
∘ mindestens eine ionische Flüssigkeit in Form eines
Lösungsmittels, das mindestens ein Kation und ein Anion umfasst, deren Kombination eine Flüssigkeit mit einer Schmelztemperatur unter 100 °C erzeugt,
∘ einen Redoxvermittler in Form eines Ions in Lösung, das in einem Silberauslaugungs- oder Silberlösungsschritt reduziert und in einem Elektrolyseschritt oxidiert werden kann,
∘ gegebenenfalls Wasser,
wobei das Lösen zur Bildung von Silberionen in Lösung führt,
c) Trennen des Zerkleinerungsguts von der Lösung,
d) Durchführen einer Elektrolyse der Lösung, um die Silberionen zu reduzieren und den Redoxvermittler zu regenerieren.

2. Verfahren nach dem vorhergehenden Anspruch, **dadurch gekennzeichnet, dass** der Lösungsschritt bei einer Temperatur zwischen 15 °C und 80 °C, vorzugsweise in der Größenordnung von 25 °C, durchgeführt wird.

3. Verfahren nach einem der vorhergehenden Ansprüche, **dadurch gekennzeichnet, dass** der Redoxvermittler ein Metallsalz ist, ausgewählt aus Eisen, Kupfer, Ruthenium, Silber, Zinn, Kobalt, Vanadium, Chrom und Mangan.

4. Verfahren nach dem vorhergehenden Anspruch, **dadurch gekennzeichnet, dass** das Metallsalz ein Eisen(III) -Salz oder ein Kupfer(II) -Salz ist.

5. Verfahren nach einem der vorhergehenden Ansprüche, **dadurch gekennzeichnet, dass** die ionische Flüssigkeit aus einem Kation und einem Anion gebildet wird,
wobei das Kation ausgewählt ist aus Imidazolium, Pyrrolidinium, Ammonium, Piperidinium und Phosphonium,
wobei das Anion ausgewählt ist aus Halogeniden, Thiocyanat, Tricyanomethanid und Dicyanamid.

6. Verfahren nach dem vorhergehenden Anspruch, **dadurch gekennzeichnet, dass** das Kation ein Imidazolium und das Anion ein Halogenid ist.

7. Verfahren nach einem der vorhergehenden Ansprüche, **dadurch gekennzeichnet, dass** die Lösung frei von Schwefelverbindungen ist.

8. Verfahren nach einem der vorhergehenden Ansprüche, **dadurch gekennzeichnet, dass** in Schritt d) die negative Elektrode aus rostfreiem Stahl, Kohlenstoff, Titan, Silber oder einem Edelmetall besteht.

9. Verfahren nach einem der vorhergehenden Ansprüche, **dadurch gekennzeichnet, dass** in Schritt d) die positive Elektrode aus Stahl, Kohlenstoff oder einem Edelmetall besteht.

10. Verfahren nach einem der vorhergehenden Ansprüche, **dadurch gekennzeichnet, dass** die Photovoltaikzelle eine Zelle aus kristallinem Silizium oder polykristallinem Silizium ist.

11. Verfahren nach einem der vorhergehenden Ansprüche, **dadurch gekennzeichnet, dass** vor Schritt a) eine Wärmebehandlung durchgeführt wird, um die in der Photovoltaikzelle vorhandenen Polymerelemente zu entfernen.

12. Verfahren nach einem der vorhergehenden Ansprüche, **dadurch gekennzeichnet, dass** nach Schritt a) das Zerkleinerungsgut in eine saure Lösung mit einem pH-Wert von 0 bis 4 eingetaucht wird, um Aluminium, das in der Photovoltaikzelle vorhanden ist, aufzulösen und von dem Zerkleinerungsgut zu trennen.

13. Verfahren nach dem vorhergehenden Anspruch, **dadurch gekennzeichnet, dass** die Temperatur der sauren Lösung zwischen 20 °C und 80 °C liegt.

14. Verfahren nach einem der Ansprüche 12 und 13, **dadurch gekennzeichnet, dass** das Fest/Flüssig-Verhältnis zwischen 1 % und 30 % liegt, und dass das Fest/Flüssig-Verhältnis vorzugsweise in der Größenordnung von 10 % liegt.

15. Verfahren nach einem der vorhergehenden Ansprüche, **dadurch gekennzeichnet, dass** der Prozentsatz von Wasser in der Lösung im Verhältnis zur ionischen Flüssigkeit weniger als 50 Mol-% beträgt und vorzugsweise in der Größenordnung von 10 Mol-% liegt.

16. Verfahren nach einem der vorhergehenden Ansprüche, **dadurch gekennzeichnet, dass** die ionische Flüssigkeit eine Konzentration zwischen 0,1 mol/l und 10 mol/l, vorzugsweise zwischen 1 mol/l und 10 mol/l, noch bevorzugter zwischen 1 mol/l und 5 mol/l aufweist.

17. Verfahren nach einem der vorhergehenden Ansprüche, **dadurch gekennzeichnet, dass** die Lösung zwei ionische Flüssigkeiten umfasst, wobei die erste ionische Flüssigkeit als ein neutraler Träger und die zweite ionische Flüssigkeit als ein Komplexbildner wirkt.

18. Verfahren nach dem vorhergehenden Anspruch, **dadurch gekennzeichnet, dass** die erste ionische Flüssigkeit Bis(trifluormethylsulfonyl)imid ist.

## Claims

1. Method for recycling the silver present in a solar cell comprising the following successive steps:
a) grinding the solar cell so as to form a ground material containing particles of silver,
b) dissolving the silver contained in the ground material in a solution containing:
∘ at least one ionic liquid in the form of a solvent comprising at least one cation and one anion the association of which generates a liquid with a melting temperature of less than 100°C,
∘ a redox mediator in the form of an ion in solution able to be reduced in a leaching or dissolution step of the silver and to be oxidised in an electrolysis step,
∘ possibly water,
the dissolution leading to the formation of silver ions in solution,
c) separating the ground material from the solution,
d) performing electrolysis of the solution to reduce the silver ions and to regenerate the redox mediator.

2. Method according to the foregoing claim, **characterized in that** the dissolution step is performed at a temperature between 15°C and 80°C, and preferably at about 25°C.

3. Method according to either one of the foregoing claims, **characterized in that** the redox mediator is a metal salt chosen from iron, copper, ruthenium, silver, tin, cobalt, vanadium, chromium and manganese.

4. Method according to the foregoing claim, **characterized in that** the metal salt is an iron (III) salt or a copper (II) salt.

5. Method according to any one of the foregoing claims, **characterized in that** the ionic liquid is formed by a cation and an anion,
the cation being chosen from imidazolium, pyrrolidinium, ammonium, piperidinium and phosphonium,
the anion being chosen from halogenides, thiocyanate, tricyanomethanide and dicyanamide.

6. Method according to the foregoing claim, **characterized in that** the cation is an imidazolium and **in that** the anion is a halogenide.

7. Method according to any one of the foregoing claims, **characterized in that** the solution is devoid of sulphur compounds.

8. Method according to any one of the foregoing claims, **characterized in that** in step d), the negative electrode is made from stainless steel, carbon, titanium, silver or a noble metal.

9. Method according to any one of the foregoing claims, **characterized in that** in step d), the positive electrode is made from steel, carbon, or a noble metal.

10. Method according to any one of the foregoing claims, **characterized in that** in the solar cell is a cell made from crystalline silicon or from polycrystalline silicon.

11. Method according to any one of the foregoing claims, **characterized in that**, before step a), a heat treatment is performed so as to eliminate the polymer elements present in the solar cell.

12. Method according to any one of the foregoing claims, **characterized in that**, after step a), the ground material is immersed in an acid solution having a pH in the 0 to 4 range to dissolve the aluminium present in the solar cell and separate it from the ground material.

13. Method according to the foregoing claim, **characterized in that** the temperature of the acid solution is comprised between 20°C and 80°C.

14. Method according to one of claims 12 and 13, **characterized in that** the solid/liquid ratio is comprised between 1% and 30%, and preferably the solid/liquid ratio is about 10%.

15. Method according to any one of the foregoing claims, **characterized in that** the percentage of water in the solution compared with the ionic liquid is less than 50% molar, preferably about 10% molar.

16. Method according to any one of the foregoing claims, **characterized in that** the ionic liquid has a concentration comprised between 0.1mol/L and 10mol/L, preferably between 1mol/L and 10mol/L, and even more preferentially between 1mol/L and 5mol/L.

17. Method according to any one of the foregoing claims, **characterized in that** the solution comprises two ionic liquids, the first ionic liquid acting as neutral support and the second ionic liquid acting as complexing agent.

18. Method according to the foregoing claim, **characterized in that** the first ionic liquid is bis(trifluoromethane)sulfonimide.
